# EUROPÄISCHE PATENTSCHRIFT

(11) **EP 1 218 794 B1**
(45) Veröffentlichungstag und Bekanntmachung des Hinweises auf die Patenterteilung: **19.02.2003**
(21) Anmeldenummer: 00926664.4
(22) Anmeldetag: 04.03.2000
(51) Int. Cl.: G02F 1/15, C09K 9/00

(54) **ELEKTROCHROMES ELEMENT**
ELECTROCHROMIC ELEMENT
ELEMENT ELECTROCHROME

(30) Priorität: 27.03.1999 DE 19914093
(43) Veröffentlichungstag der Anmeldung: 03.07.2002
(73) Patentinhaber: DaimlerChrysler AG, 70567 Stuttgart (DE)
(72) Erfinder: SCHERBER, Werner, D-88697 Bermatingen (DE); HÄRING, Jochen, D-78464 Konstanz (DE); KRÄNZLER, Thomas, D-88682 Salem (DE); WELLER, Horst, D-22393 Hamburg (DE); HAASE, Markus, D-22457 Hamburg (DE); ZUM FELDE, Ulf, D-21720 Steinkirchen (DE)
(86) Internationale Anmeldenummer: DE0000702
(87) Internationale Veröffentlichungsnummer: WO00058781

(56) Entgegenhaltungen:
- GB-A- 2 081 922
- US-A- 5 142 406
- US-A- 5 876 633

## Beschreibung

Die Erfindung betrifft ein elektrochromes Element nach dem Oberbegriff des Patentanspruchs 1.

Elektrochrome (EC) Elemente sind derzeit für vielfältige Anwendungen in der Diskussion; beispielsweise für die Fahrzeug- und Gebäudeverglasungen, für Spiegel mit veränderbarem Reflexionsgrad, in der Displaytechnologie etc. Dabei werden die optischen Eigenschaften eines Schichtsystems, wie Absorptions-, Transmissions- und Reflexionsvermögen, über elektrische Signale gesteuert.

Ein konventionelles EC-System, z.B. nach der **DE 44 09 470 A1** oder **DE 36 43 692 A1,** besteht typischerweise aus einem Mehrlagenaufbau aus elektrochromer Funktionsschicht, einem ionenleitenden Elektrolyten mit gelöstem Salz und einer Speicherschicht, die in der Lage ist, bewegliche Ionen auf- bzw. abzugeben. Der Ionentransfer wird über großflächige Elektroden gesteuert, wobei zumindest eine transparent ist.

Charakteristisches Element der bekannten Systeme sind spezielle anorganische oder organische Funktionsschichten, die durch Änderung des Oxidationszustandes eine reversible Einfärbung aufweisen. Beispiele für solche elektrochrome Materialien sind die Oxide der Übergangsmetalle, wie Wolfram, Niob, Vanadium, Titan, Tantal, Nickel u.a. sowie Polyanilin, Polythiophen u.a. Der elektrochrome Mechanismus an diesen Substanzen basiert auf Interkalation beweglicher Ionen auf Zwischengitterplätze des EC-Materials, wobei diskrete Farbzentren mit einer materialspezifischen Absorptionsbande entstehen. Um das Eindringen der Ionen in das EC-Material zu erleichtern, werden üblicherweise kleine Ionen wie Lithium oder Wasserstoff (Protonen) eingesetzt.

Gemeinsames Merkmal der bekannten EC-Materialien ist außerdem, daß sie sowohl Elektronen- als auch Ionenleitfähigkeit aufweisen. Diese Besonderheit ist - neben der Farbänderung - unabdingbare Voraussetzung für die EC-Funktion in den bekannten Schichtkonfigurationen (*engl.: double charge injection*).

Der grundlegende Funktionsmechanismus der konventionellen Elektrochromie - die Interkalation von beweglichen Ionen - begrenzt die Leistungsfähigkeit solcher Systeme hinsichtlich Einfärbungstiefe, Schaltgeschwindigkeit und Stabilität. So zeigt nur eine limitierte Anzahl von Materialien einen technisch nutzbaren elektrochromen Effekt mit einer ausreichenden Einfärbung im sichtbaren oder infraroten Wellenlängenbereich. Außerdem läßt sich eine farbneutrale Einfärbung nur mit Einschränkungen, z.B. auf Kosten des Transmissionshubs oder der Färbeeffektivität (*engl.: coloring efficiency*) erzeugen. Hohe Schaltgeschwindigkeiten, wie sie in sicherheitsrelevanten Bereichen (z.B. der Windschutzscheibe von Fahrzeugen) gefordert sind, werden aufgrund des Ionentransfers in der elektrochromen Schicht, im Elektrolyten und in der Speicherschicht sowie aufgrund der dabei zu überwindenden Übergangswiderstände und Haftpotentiale im allgemeinen nicht erreicht.

Die am häufigsten verwendeten elektrochromen Materialien, wie Wolframoxid oder Polyanilin, sind zudem schwierig in der praktischen Handhabung, so daß sich die Produktion stabiler, reproduzierbarer und optisch hochwertiger EC-Elemente technisch sehr aufwendig gestaltet und bisher nicht zufriedenstellend gelöst ist.

In der **WO 97/23578** sowie der korrespondierenden **US 5,876,633** werden kleine hochdotierte Einzelpartikel aus SnO₂ beschrieben, die eine stärkere elektrochrome Einfärbung als kompakte SnO₂-Dünnschichten oder Festkörper ermöglichen. In solchen kleinen SnO₂-Partikel können darüber hinaus deutlich höhere Dotierkonzentrationen (Sb, Nb) erzielt werden, so daß die Ladungsträgerdichte ausreicht, sichtbares Licht teilweise zu absorbieren. Diese Partikel weisen dadurch eine intrinsische Eigenfarbe auf. In der **WO 97/23578** ist für die Partikelgröße ein Bereich von 50 nm bis 20 µm angegeben. Die Partikel werden insbesondere in elektrochromen Displays eingesetzt.

In der **WO 98/35267** ist ein elektrochromes Display beschrieben, bei dem ein nanoporöses halbleitendes Metalloxid als Träger eingesetzt wird für ein Redox-Chromophor-Material, dessen elektrochrome Eigenschaften gesteuert werden.

Die **US 5,724,187** offenbart ein elektrochromes Gerät, dessen Funktionselement aus einem elektrochromen Film besteht, der gegebenenfalls, z.B. zur Verschiebung der spektralen Absorptionskante des Basismaterials, dotiert wird.

Der Erfindung liegt die Aufgabe zugrunde, ein elektrochromes Element zu schaffen, mit dem gegenüber den bekannten Elementen wesentlich kürzere Schaltzeiten und ein höherer optischer Schalthub (Modulationstiefe) bei guter Farbneutralität erreicht wird. Es soll außerdem kostengünstig und großflächig herstellbar sein und eine hohe Langzeitstabilität aufweisen.

Diese Aufgabe wird mit Gegenstand des Patentanspruchs 1 gelöst. Vorteilhafte Ausführungen der Erfindung sowie ein Verfahren zur Herstellung der elektrochromen Schicht sind Gegenstand weiterer Ansprüche.

Erfindungsgemäß ist die elektrochrome Funktionsschicht des Elements eine transparente, im Nanometerbereich strukturierte Schicht aus einem dotierten Halbleiter. Sie weist Strukturgrößen im Bereich kleiner als 50 nm auf. Das Halbleitermaterial muß dabei nicht im herkömmlichen Sinn elektrochrom sein, so daß sehr stabile Basissubstanzen eingesetzt werden können.

Für Anwendungen im sichtoptischen Spektralbereich eignen sich zum Beispiel Zinnoxid SnO₂, Zinkoxid ZnO, Kadmiumoxid CdO, Titanoxid TiO₂, Tantaloxid Ta₂O₅, während Silizium Si, Germanium Ge, Zinkselenid ZnSe u.a. insbesondere für Infrarotanwendungen geeignet sind.

Durch die Dotierung solcher Halbleitermaterialien mit Fremdatomen ergibt sich eine technologisch einfache Möglichkeit, das Absorptionsvermögen der nanoporösen EC-Schichten in weiten Bereichen des sichtbaren und infraroten Wellenlängenbereichs individuell einzustellen. Der Arbeitsbereich des erfindungsgemäßen Elements kann darüberhinaus auch durch Einstellung der Strukturgrößen der elektrochromen Funktionsschicht auf einen bestimmten Spektralbereich eingestellt werden.

Die Bezirke der nanoporösen Funktionsschicht hängen zusammen und bilden ein elektrisch leitfähiges Netzwerk mit großer innerer Oberfläche, welches einerseits gut leitend mit der Elektrode verbunden ist und andererseits in direktem Kontakt mit dem ionenleitenden Elektrolyten steht. Idealerweise sind die Poren komplett mit Elektrolytmaterial gefüllt.

Die Änderung der optischen Eigenschaften einer solchen dotierten nanoporösen Halbleiter-Funktionsschicht erfolgt durch Anlegen eines elektrischen Feldes, wodurch die Absorptionsfähigkeit des EC-Materials je nach Polarität erhöht oder erniedrigt wird. Die energetische Lage des maximalen Absorptions- bzw. Transmissionshubs liegt abhängig von Dotierungsgrad und Strukturgrößen im sichtbaren oder im infraroten Wellenlängenbereich und kann bis zu 75 % betragen.

Im Gegensatz zu konventionellen EC-Elementen bei denen durch Interkalation von kleinen Ionen (Wasserstoff oder Lithium) diskrete Farbzentren in dem elektrochromen Material erzeugt werden, wird bei dem erfindungsgemäßen EC-Element allein durch Anlagerung von beweglichen Ionen an die Grenzfläche der Funktionsschicht eine Änderung der optischen Eigenschaften erreicht. Ein elektrochromer Effekt wird somit auch bei großen Ionen erhalten.

Der Einsatz von dotiertem Zinnoxid SnO₂ als Material für die elektrochrome Funktionsschicht hat eine herausragende Bedeutung, da es aufgrund seiner chemischen Stabilität und hohen elektrischen Leitfähigkeit das bevorzugte Material für transparente Elektroden darstellt. Somit können EC-Funktionsschicht und Elektrode aus dem gleichen Basismaterial präpariert werden. Die Elektrode selbst muß jedoch nicht die erfindungsgemäße Nanostrukturierung aufweisen.

Die Herstellung der elektrochromen Funktionsschicht kann besonders vorteilhaft aus einer kolloidalen Lösung dispergierter Nanopartikel, die aus einem dotierten Halbleitermaterial bestehen, und eine Partikelgröße kleiner 50nm aufweisen, erfolgen.

Dabei kann die Funktionsschicht insbesondere durch Spin-Coating, durch Sol-Gel-Tauchbeschichtung oder durch ein Spraypyrolyse-Verfahren aus der kolloidalen Lösung mit anschließender Wärmebehandlung gewonnen werden.

Alternativ kann die Herstellung der Funktionsschicht durch ein elektrochemisches Verfahren, wie z.B. poröses Ätzen oder poröses Anodisieren von Metallen, erfolgen.

Ein weiteres geeignetes Herstellverfahren für die Funktionsschicht ist die Umhüllung mit einer nanostrukturierten Maske, die nachträglich selektiv entfernt wird.

Der Vorteil der Erfindung liegt vor allem darin begründet, daß mit den erfindungsgemäß nanostrukturierten Funktionsschichten starke elektrochrome Effekte, z.B. ein hoher Transmissionshub, erzielt werden können. Die Schaltzeiten sind dabei wesentlich geringer als bei den bekannten elektrochromen Elementen.
Darüber hinaus kann die Herstellung elektrochromer Zellen wesentlich vereinfacht werden.

Die Erfindung wird im folgenden anhand von Zeichnungen näher erläutert. Es zeigen:
- Fig. 1: eine Skizze zur Struktur der erfindungsgemäßen elektrochromen Funktionsschicht;
- Fig. 2: ein erfindungsgemäßes elektrochromes Element.

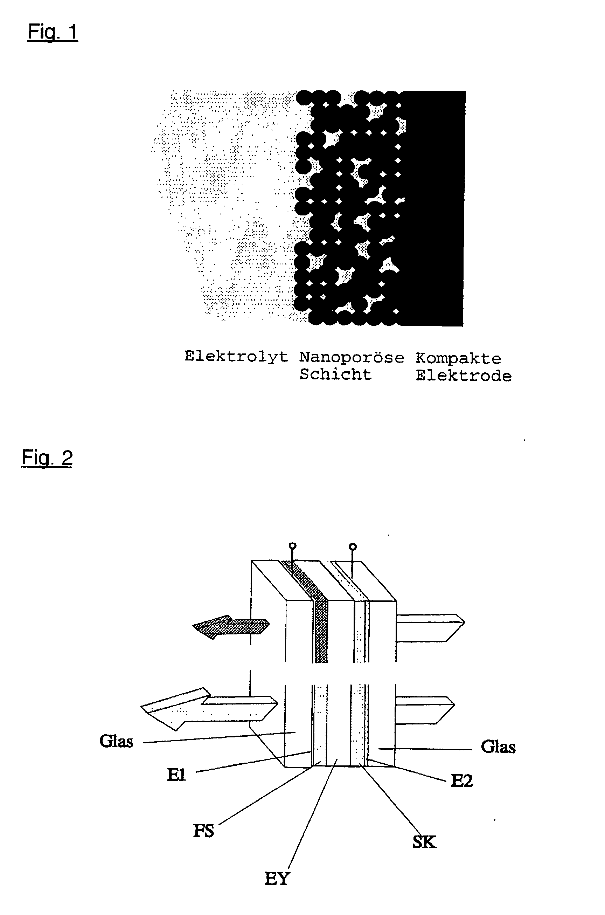

Fig. 1 zeigt eine Skizze zur Struktur der erfindungsgemäßen elektrochromen Funktionsschicht innerhalb eines elektrochromen Elements. Die Funktionsschicht ist im Nanometerbereich strukturiert, und zwar derart, daß ihre Strukturelemente kleiner als 50nm sind. Sie weist eine große innere Oberfläche auf. Die Funktionsschicht ist gut leitend mit der benachbarten, kompakten Elektrode verbunden. Sie steht außerdem im direkten Kontakt mit dem ionenleitenden Elektrolyten. Bevorzugt sind die Poren der Funktionsschicht vollständig von dem Elektrolyt ausgefüllt.

Fig. 2 zeigt ein erfindungsgemäßes elektrochromes Element in der Ausführung als Gebäude- oder Fahrzeugverglasung.

Sie weist folgenden Schichtaufbau auf:
- Glasscheibe G1
- transparente Elektrode E1
- elektrochrome Funktionsschicht FS
- ionenleitender Elektrolyt EY
- Schicht mit hoher elektrischer Ladungskapazität SK
- transparente Gegenelektrode E2
- Glasscheibe G2.

Die Darstellung ist hier symbolhaft in eine untere und eine obere Hälfte aufgeteilt, die den verschiedenen Schaltzuständen der elektrochromen Funktionsschicht FS entspricht. In der unteren Hälfte weist das Element eine hohe Stahlungsdurchlässigkeit auf (erkennbar an dem großen austretenden Pfeil), in der oberen Hälfte eine geringe Strahlungsdurchlässigkeit (erkennbar an dem kleineren austretenden Pfeil).

Die beiden kompakten Elektroden E1,E2, z.B. aus dotiertem SnO₂, dienen zur elektrischen Steuerung der optischen Eigenschaften des Elements. Der Ausdruck 'kompakt' wird hier in Abgrenzung zum nanoporösen Aufbau der Funktionsschicht FS verwendet. Benachbart zu der ersten Elektrode ist die nanoporöse elektrochrome Funktionsschicht FS vorhanden, die aus einem dotierten Halbleitermaterial besteht. Als Halbleitermaterial kann z.B. ein halbleitendes Oxid der Elemente Zinn, Zink, Cadmium, Indium, Titan, Tantal, Niob, usw. oder Silizium, Germanium, Galliumarsenid, Siliziumcarbid, Indiumphosphid, Kadmiumsulfid, Zinkselenid, usw. eingesetzt werden. Je nach Arbeitspunkt werden diese Halbleiter in einer Konzentration *x* 0 < *x* ≤ 30 mol% dotiert. Als Dotierstoffe können Metalle wie z.B. Antimon, Niob, Vanadium, Zinn, Aluminium oder ein Halogen wie z.B.Fluor, Chlor, Brom oder Jod verwendet werden.

Die Gegenelektrode E2 ist benachbart zu der Schicht SK mit hoher elektrischer Ladungskapazität angeordnet. Diese kann wie die Funktionsschicht FS eine transparente nanostrukturierte Halbleiterschicht sein, deren Dotierung jedoch so eingestellt wird, daß sie gerade keinen elektrochromen Effekt zeigt. Alternativ kann auch eine konventionelle Ionenspeicherschicht (z.B. CeₓTi_{y}O_{z}, NiₓO_{y}, VₓO_{y}, Polyanilin oder Polyethylendioxythiophen) zur reversiblen Aufnahme beweglicher Ionen durch Interkalation auf Zwischengitterplätze eingesetzt werden. Gekoppelt wird das gesamte System über einen ionenleitenden Elektrolyten EY, der die Nanoporen der EC-Funktionsschicht FS und ggf. die Nanoporen der Schicht SK mit hoher Ladungskapazität ausfüllt. Wesentlich hierbei ist eine möglichst vollständige Benetzung der nanoporösen Struktur mit dem Elektrolyt, die zum Beispiel durch die Befüllung der Poren unter Vakuumbedingungen erreicht werden kann.
Als Elektrolyt kann z.B. Wasser, ein Alkohol, Propylencarbonat, Polyethylenglykol, eine wasserfreie Phosphorsäure oder sulfonierte PAEK eingesetzt werden.

Bei einer weiteren, hier nicht gezeigten Ausführung, bei der das erfindungsgemäße Element nicht als Verglasungselement, sondern als steuerbarer Spiegel eingesetzt wird, muß eine reflektierende Schicht vorhanden sein. Diese kann innerhalb oder außerhalb des Schichtsystems angeordnet sein. Bei einer solchen Ausführung kann vorteilhaft eine Elektrode E1 oder E2 als spiegelnde Metallschicht ausgebildet sein. Die entgegengesetzte Elektrode ist transparent ausgebildet.

Die Herstellung der erfindungsgemäßen EC-Funktionsschicht wird im folgenden anhand von Beispielen beschrieben:

### Beispiel 1 - Spincoating

Basis für die Herstellung ist eine kolloidale Lösung monodisperser Halbleiter-Nanopartikel, die je nach Einsatzgebiet unterschiedlich stark dotiert sind. Im Folgenden wird dies am Beispiel von antimondotiertem Zinndioxid exemplarisch dargestellt:
Es wird Zinnchlorid in Wasser gelöst und mit konzentrierter Salzsäure versetzt, um klare Lösungen zu erhalten. Zur Dotierung mit Antimon löst man Antimonchlorid in konzentrierter Salzsäure. Für einen optimale Verfärbungseffizienz beträgt der Molenbruch x = n_{Sb}/(n_{Sb} + n_{Sn}) zwischen x = 0,1 und 0,3 , vorzugsweise bei x = 0,20-0,25. Diese Lösung tropft man unter starkem Rühren zur Zinnchlorid-Lösung. Diese transparente saure Lösung wird durch Zugabe von Ammoniak auf einen pH-Wert 3-8 gebracht. Der sich dabei bildende voluminöse Niederschlag wird zentrifugiert und wiederholt mit Wasser gewaschen, bis der Niederschlag nach längerem Rühren kolloidal in Lösung geht. Diese kolloidale Lösung mit Teilchengrößen von 2-3 nm wird anschließend chloridfrei dialysiert, am Rotationsverdampfer eingeengt, filtriert und stabilisiert. Solche Kolloidlösungen sind transparent und weisen je nach Antimon-Dotierung eine gelbe bis rötliche Färbung auf. Undotierte kolloidale Zinndioxid-Lösungen sind farblos.

Diese chloridfreien Kolloidlösungen werden anschließend mit Glycerin versetzt und an einem Rotationsverdampfer eingeengt. Die während des Abkühlens gelierende Lösung wandelt sich nach Zugabe von konzentrierter Ammoniaklösung und Behandlung im Ultraschallbad wieder in eine leicht viskose Flüssigkeit um. Diese Lösung wird nach Filtration auf ein schnell rotierendes Substrat im Spincoating-Verfahren aufgebracht und im Ofen bei Temperaturen T > 200°C verdichtet und gehärtet. Je nach gewünschter Schichtdicke kann dieses Verfahren mehrmals wiederholt werden. Das Resultat sind transparente nanoporöse SnO₂-Schichten mit einem Dotiergrad bis zu 30 mol% Antimon und Strukturgrößen im Bereich 3-10 nm.

### Beispiel 2 - Sol Gel-Tauchbeschichtungsverfahren

Die Herstellung von nanoporösen Halbleiter-Funktionsschichten durch ein Sol Gel-Verfahren wird anhand von dotiertem Zinndioxid SnO₂ exemplarisch ausgeführt:
Die Synthese kolloidaler dotierter SnO₂-Lösungen für Tauchbeschichtung entspricht bis zur Herstellung chloridfreier Lösungen dem oben beschriebenen Vorgehen.
Eine homogene Beschichtung von Glas oder anderen oxidischen Substraten erfordert einen Wechsel auf alkoholische Lösungsmittel. Dazu wird der mit Wasser gewaschene Niederschlag zunächst mit 2-Propanol gewaschen, danach mit einer Lösung von (Bu₄N)OH in Methanol versetzt und mit 2-Propanol verdünnt. Unter starkem Rühren erhält man eine kolloidale Lösung, die aus dispergierten SnO₂-Nanopartikeln von 2-3 nm Durchmesser besteht. Aus einer solchen alkoholischen Kolloidlösung wird das Substrat mit konstanter Geschwindigkeit gezogen und nach einem trocknenden Konditionierschritt im Ofen getempert und verdichtet. Dieses Vorgehen kann zur Herstellung dicker und transparenter SnO₂-Beschichtungen mehrmals wiederholt werden. Als Resultat erhält man dotierte nanoporöse Funktionsschichten die je nach Tempertemperatur Strukturgrößen von 3-10 nm aufweisen.

### Beispiel 3 - Spray-Pyrolyse

Zur Herstellung von dotierten nanoporösen Halbleiter-Funktionsschichten im Spray-Pyrolyseverfahren werden kolloidale Lösungen verwendet, wie sie anhand von dotiertem SnO₂ in Beispiel 1 und Beispiel 2 exemplarisch beschrieben wurden.
Beim Beschichtungsprozeß wird das Substrat auf Temperaturen zwischen 200 und 800°C erhitzt und mit der kolloidalen Lösung besprüht. Auf der heißen Substratoberfläche verdampft das Lösungsmittel und vernetzen die Halbleiter-Nanopartikel zu einer porösen Funktionsschicht.

### Beispiel 4 - elektrochemische Ätzverfahren

Die Herstellung nanoporöser Halbleiterstrukturen wie Silizium Si, Siliziumcarbid SiC, Galliumarsenid GaAs, Indiumphosphid InP, Galliumphosphid GaP, Germanium Ge Zinnoxid SnO₂ und Cadmiumselenid CdSe ist durch einen elektrochemischen Ätzprozeß in säurehaltigen Elektrolyten möglich. Dabei werden die eigentlich gegen die verwendete Säure inerten Halbleitermaterialien durch Bereitstellen positiver Ladungsträger an der Grenzfläche infolge einer Redoxreaktion aufgelöst. Die grundlegende Bedingung für eine poröse Strukturbildung ist ein passiver Zustand der Porenwände und ein aktiver Zustand am Porenboden, welcher die Porenbildung unterstützt. Dies kann durch einen Dotiergrad des Halbleiters bzw. durch geeignete Elektrolytzusammensetzung erreicht werden.

Die experimentelle Vorgehensweise wird im folgenden anhand von porösem Silizium exemplarisch beschrieben:
Silizium wird in flußsäurehaltigen Elektrolyten mit HF-Konzentrationen von 1-50 % durch Anlegen eines elektrischen Potential bei Stromstärken von 0-300 mA/cm² porös geätzt. Die Mikrostruktur der Poren ist dabei abhängig vom Dotiergrad des Halbleiters und kann zwischen 2 nm und einigen Mikrometern Porenwandstärke betragen. Die Porosität kann über das Verhältnis von Stromstärke und Elektrolytkonzentration zwischen 40-80 % eingestellt werden. Die für ein elektrochromes Element optimale Dotierung kann nachträgliche thermische Interdiffusion angepaßt werden.

### Beispiel 5 - Maskierungstechniken

Eine poröse Halbleiter-Nanostruktur kann durch Umhüllung einer nanostukturierten Maske hergestellt werden, die nach Fertigstellung der Funktionsschicht nachträglich entfernt wird. Eine solche nanotrukturierte Maske kann u.a. aus porös anodisiertem Aluminiumoxid bestehen, deren regelmäßige Porenstruktur je nach Präparationsbedingungen auf Strukturgrößen von 5-500 nm eingestellt werden kann. Diese Aluminiumoxid-Maske kann durch Tauchbeschichtung im Sol-Gel-Verfahren mit einem anschließenden Hochtemperaturtemperschritt mit dem dotierten Halbleitermaterial umhüllt und nachträglich naßchemisch selektiv geätzt werden.
Ein alternativer Ansatz sind Template-Strukturen aus Latex-Partikeln im Größenordnungsbereich 5-5000 nm. Diese regelmäßig angeornete Matrix verdampft bei einem Sol-Gel-Prozeß zur Umhüllung der regelmäßigen Latexstruktur mit dem Halbleiter während des Hochtemperaturtemperschritts, so daß auch auf diese Weise eine nanoporöse Funktionsschicht erhalten wird.

Die Einsatzmöglichkeiten des erfindungsgemäßen EC-Elements umfassen nicht nur die der konventionellen Elektrochromie, sondern gehen weit darüber hinaus. Die bisherigen Anwendungen liegen auf den Gebieten der Fahrzeug- und Gebäudeverglasungen mit steuerbarer Transmission, schaltbaren Spiegeln (z.B. abblendbare Spiegel, insbesondere für Kraftfahrzeuge) sowie Displays. Während sich die herkömmlichen, seit vielen Jahren bekannten EC-Systeme aus den oben genannten Gründen bisher noch kaum am Markt etablieren konnten, versprechen die erfindungsgemäßen Elemente aufgrund ihrer Stabilität, ihrer optischen Qualität und der einfachen Herstellbarkeit entscheidende Vorteile für eine technische Umsetzung.

Darüber hinaus lassen sich neue Anwendungen aufgrund der spezifischen Merkmale der erfindungsgemäßen Elemente erschließen: So sind beispielsweise sicherheitsrelevante Bereiche, wie die Frontverglasung von Kraftfahrzeugen, Bahnfahrzeugen, Flugzeugen u.ä. nur über schnell schaltende Glaselemente denkbar. Selbst bei den Seitenscheiben von Pkw's ist heute ungeklärt, ob herkömmliche EC-Scheiben mit Schaltzeiten von etwa einer Minute die Voraussetzungen für eine gesetzliche Zulassung erfüllen können.

Im Bereich der Display-Technik liegt ebenfalls ein interessantes Anwendungspotential der Erfindung. Herkömmliche EC-Systeme würden sich - sofern andere Merkmale wie Kosten und Haltbarkeit gegeben wären - zunächst nur für statische Anzeigen einsetzen lassen, beispielsweise als Informationstafeln an Flughäfen und Bahnhöfen, Preisschildern an Tankstellen oder im Bereich der Plakatwerbung. EC-Systeme mit Schaltzeiten von etwa einer Sekunde könnten im gesamten Sektor der Instrumenten-Displays in Fahrzeugen, für neuartige bildgebende Verfahren für Fahrerinformationssysteme, für Verkehrsleitsysteme oder für Uhrendisplays eingesetzt werden. Desweiteren bildet die Möglichkeit der farbneutralen Abdunkelung in Verbindung mit Schaltzeiten von unter 100 oder 10 ms die prinzipielle Voraussetzung zur Darstellung von flachen leichten Farbdisplays mit Segment- oder Matrixansteuerung, als Alternative zu den bekannten Systemen auf Basis von Flüssigkristallen. Potentielle Vorteile von EC-Displays im Vergleich zu LC-Displays sind heute nicht abschließend zu beurteilen, sie liegen aber voraussichtlich im größeren Aspektwinkelbereich, im Kontrastumfang sowie in der Herstellungstechnologie (*all solid state device*).

Ein weiterer Vorteil der erfindungsgemäßen EC-Systeme liegt in der Variabilität des spektralen Arbeitsbereiches der Halbleiterfunktionsschicht, was bei klassischen EC-Materialien grundsätzlich nicht möglich ist. Dort ist für jeden Spektralbereich und für jeden Farbort ein spezifisches Funktionsmaterial zu definieren und im Zusammenspiel mit der Gesamtzelle in meist aufwendiger Weise zu optimieren. Bei dem neuartigen EC-Funktionsmechanismus des erfindungsgemäßen EC-Elements läßt sich durch Änderung des Dotierungsgrades bzw. der Strukturgrößen die energetische Lage der Absorptionsbanden in weiten Bereichen des Spektralbereichs verschieben, ohne die restlichen Komponenten des Systems wesentlich zu modifizieren.

Spezifische Anwendungen im Infrarot ergeben sich zum Beispiel in der militärischen Tarnung. Im nahen Infrarot (NIR) liegen bekanntlich charakteristische Banden der Vegetation, so daß es von entscheidender taktischer Bedeutung ist, wenn sich ein Fahrzeug durch elektrische Steuerung seines NIR-Reflexionsvermögen bei wechselnden Umgebungsbedingungen oder bei Sommer/Winter-Übergang an den jeweiligen Hintergrund anpassen kann. Noch interessanter ist eine entsprechende Anpassung im thermischen Infrarot TIR, also im Bereich des 'dritten atmosphärischen Fensters' bei etwa 8 bis 12 um Wellenlänge. Da in diesem Spektralbereich die Aufklärung mit leistungsfähigen Wärmebildgeräten erfolgt, welche Objekte ausschließlich aber sehr empfindlich aufgrund ihre Temperaturunterschiede zur Umgebung erkennen kann, besteht seit längerem das Bestreben, durch kontrollierte Einstellung des TIR-Absorptions- bzw. des Wärmeemissionsgrades der Oberfläche die 'scheinbare Temperatur' des Objektes zu manipulieren und den ständig wechselnden Betriebstemperaturen sowie den Umgebungs- und Wetterbedingungen der Szene anzupassen. Obwohl für diese Anwendungen Lösungsvorschläge grundsätzlich existieren, sind praktisch einsetzbare 'elektroemissive' oder 'elektroreflektive' Systeme für den IR-Bereich vornehmlich aus Stabilitätsgründen bisher nicht eingeführt.

Eine ähnliche Situation besteht in der möglichen Anwendung von TIR-EC-Systemen zur Thermalkontrolle von Raumfahrzeugen. Nach dem Stand der Technik wird jedes Raumfahrzeug auf herkömmliche Weise mit Hilfe von beweglichen Blenden, mit Heatpipes, mit elektrischen, aus Solarzellen gespeisten Heizern u.ä. thermostatisiert. Der Einsatz von zuverlässig arbeitenden elektroemissiven Elementen würde hier zu bedeutenden Gewichts- und Kosteneinsparungen führen und darüber hinaus die Temperaturschwankungen des gesamten Raumfahrzeuges reduzieren, so daß qualitativ einfachere mechanische, optische und elektronische Bauelemente einsetzbar wären, was wiederum die Gesamtkosten des Systems zusätzlich erniedrigen würde.

## Patentansprüche

1. Elektrochromes Element, umfassend
- eine Elektrode (E1),
- eine elektrochrome Funktionssschicht (FS),
- einen ionenleitenden Elektrolyten (EY),
- eine Schicht mit hoher elektrischer Ladungskapazität(SK),
- eine Gegenelektrode (E2),
**dadurch gekennzeichnet, dass** die elektrochrome Funktionsschicht (FS) ausschließlich aus einer nanoporösen, dotierten Halbleiterschicht mit Strukturgrößen kleiner 50 nm besteht, welche ein zusammenhängendes, elektrisch leitfähiges Netzwerk bildet, wobei der ionenleitende Elektrolyt (EY) die Nanoporen der elektrochromen Funktionsschicht erfüllt.

2. Elektrochromes Element nach Anspruch 1, **dadurch gekennzeichnet, dass** die elektrochrome Funktionsschicht (FS) aus einem halbleitenden Oxid der Elemente Zinn, Zink, Cadmium, Indium, Titan, Tantal, Niob oder aus Silizium, Germanium, Galliumarsenid, Siliziumcarbid, Indiumphosphid, Kadmiumsulfid, Zinkselenid besteht.

3. Elektrochromes Element nach einem der vorangehenden Ansprüche, **dadurch gekennzeichnet, dass** die elektrochrome Funktionsschicht (FS) mit einer Dotierkonzentration *x* 0 < *x* ≤ 30 mol% dotiert ist.

4. Elektrochromes Element nach einem der vorangehenden Ansprüche, **dadurch gekennzeichnet, dass** der Dotierstoff für die elektrochrome Funktionsschicht (FS) ein Metall, z.B. Antimon, Niob, Vanadium, Zinn oder Aluminium ist.

5. Elektrochromes Element nach einem der vorangehenden Ansprüche, **dadurch gekennzeichnet, dass** der Dotierstoff für die elektochrome Funktionsschicht (FS) ein Halogen, z.B. Fluor, Chlor, Brom oder Jod ist.

6. Elektrochromes Element nach einem der vorangehenden Ansprüche, **dadurch gekennzeichnet, dass** die Schicht (SK) mit hoher elektrischer Ladungskapazität eine nanoporöse dotierte Halbleiterschicht mit Strukturgrößen kleiner 50nm ist, wobei deren Dotierungsgrad derart eingestellt ist, daß sich ein neutrales, nichtelektrochromes Verhalten ergibt.

7. Elektrochromes Element nach einem der vorangehenden Ansprüche, **dadurch gekennzeichnet , dass** die Schicht (SK) mit hoher elektrischer Ladungskapazität eine Ionenspeicherschicht, z.B. CeₓTi_{y}O_{z}, NiₓO_{y}, VₓO_{y}, Polyanilin oder Polyethylendioxythiophen, ist.

8. Elektrochromes Element nach einem der vorangehenden Ansprüche, **dadurch gekennzeichnet, dass** eine der beiden Elektroden (E1,E2) eine reflektierende Metallschicht ist.

9. Elektrochromes Element nach einem der vorangehenden Ansprüche, **dadurch gekennzeichnet, dass** mindestens eine der beiden Elektroden (E1,E2) transparent ist.

10. Elektrochromes Element nach einem der vorangehenden Ansprüche, **dadurch gekennzeichnet, dass** dessen Arbeitsbereich durch Dotierung der elektrochromen Funktionsschicht und/oder Variation der Strukturgrößen der elektrochromen Funktionsschicht auf den sichtoptischen Spektralbereich oder auf den nahen oder thermischen Infrarotspektralbereich eingestellt ist.

11. Verfahren zur Herstellung einer elektrochromen Funktionsschicht nach einem der vorangehenden Ansprüche 1 bis 10, **dadurch gekennzeichnet, dass** sie aus einer kolloidalen Lösung dispergierter Nanopartikel, die aus einem dotierten Halbleitermaterial bestehen, und eine Partikelgröße kleiner 50nm aufweisen, gewonnen wird.

12. Verfahren zur Herstellung einer elektrochromen Funktionsschicht nach Anspruch 11, **dadurch gekennzeichnet, dass** sie durch Spin-Coating, durch Sol-Gel-Tauchbeschichtung oder durch ein Spraypyrolyse-Verfahren aus der kolloidalen Lösung mit anschließender Wärmebehandlung gewonnen wird.

13. Verfahren zur Herstellung einer elektrochromen Funktionsschicht nach einem der vorangehenden Ansprüche 1 bis 10, **dadurch gekennzeichnet, dass** die Herstellung durch ein elektrochemisches Verfahren, wie poröses Ätzen oder poröses Anodisieren von Metallen erfolgt.

14. Verfahren zur Herstellung einer elektrochromen Funktionsschicht nach einem der vorangehenden Ansprüche 1 bis 10, **dadurch gekennzeichnet, dass** die Herstellung durch Umhüllung mit einer nanostrukturierten Maske erfolgt, die nachträglich selektiv entfernt wird.

15. Verwendung eines Elements nach einem der Ansprüche 1 bis 10 für die militärische Tarnung im Infrarot-Wellenlängenbereich.

16. Verwendung eines Elements nach einem der Ansprüche 1 bis 10 zur Thermalkontrolle von Raumfahrzeugen im Wellenlängenbereich des thermischen Infrarot.

## Claims

1. Electrochromic element, comprising
- an electrode (E1),
- an electrochromic functional layer (FS),
- an ion-conduction electrolyte (EY),
- a layer having a high electrical charging capacity (SK),
- a back electrode (E2),
**characterized in that** the electrochromic functional layer (FS) consists exclusively of a nanoporous, doped semiconductor layer having structure sizes smaller than 50 nm, which forms a continuous, electrically conductive network, the ion-conduction electrolyte (EY) filling the nanopores of the electrochromic functional layer.

2. Electrochromic element according to Claim 1, **characterized in that** the electrochromic functional layer (FS) consists of a semiconducting oxide of the elements tin, zinc, cadmium, indium, titanium, tantalum, niobium, or of silicon, germanium, gallium arsenide, silicon carbide, indium phosphide, cadmium sulphide, zinc selenide.

3. Electrochromic element according to one of the preceding claims, **characterized in that** the electrochromic functional layer (FS) is doped with a doping concentration *x* 0 < *x* • 30 mol%.

4. Electrochromic element according to one of the preceding claims, **characterized in that** the dopant for the electrochromic functional layer (FS) is a metal, for example antimony, niobium, vanadium, tin or aluminium.

5. Electrochromic element according to one of the preceding claims, **characterized in that** the dopant for the electrochromic functional layer (FS) is a halogen, for example fluorine, chlorine, bromine or iodine.

6. Electrochromic element according to one of the preceding claims, **characterized in that** the layer (SK) having a high electrical charging capacity is a nanoporous doped semiconductor layer having structure sizes smaller than 50 nm, its doping level being adjusted in such a way as to create a neutral, non-electrochromic behaviour.

7. Electrochromic element according to one of the preceding claims, **characterized in that** the layer (SK) having a high electrical charging capacity is an ion-storage layer, for example Ce_{X}Ti_{Y}O_{Z}, Ni_{X}O_{Y}, V_{X}O_{Y}, polyaniline or polyethylene dioxythiophene.

8. Electrochromic element according to one of the preceding claims, **characterized in that** one of the two electrodes (E1, E2) is a reflective metal layer.

9. Electrochromic element according to one of the preceding claims, **characterized in that** at least one of the two electrodes (E1, E2) is transparent.

10. Electrochromic element according to one of the preceding claims, **characterized in that** its working range is adjusted, by doping the electrochromic functional layer and/or varying the structure sizes of the electrochromic functional layer, to the visible-optical spectral range or to the near or thermal infrared spectral range.

11. Method for producing an electrochromic functional layer according to one of the preceding Claims 1 to 10, **characterized in that** it is obtained from a colloidal suspension of dispersed nanoparticles, which consist of a doped semiconductor material and have a particle size smaller than 50 nm.

12. Method for producing an electrochromic functional layer according to Claim 11, **characterized in that** it is obtained from the colloidal suspension by spin coating, by sol-gel dip coating or by a spray pyrolysis method, with subsequent heat treatment.

13. Method for producing an electrochromic functional layer according to one of the preceding Claims 1 to 10, **characterized in that** the production is carried out by an electrochemical method, such as porous etching or porous anodising of metals.

14. Method for producing an electrochromic functional layer according to one of the preceding Claims 1 to 10, **characterized in that** the production is carried out by covering with a nanostructured mask, which is subsequently removed selectively.

15. Use of an element according to one of Claims 1 to 10 for military camouflage in the infrared wavelength range.

16. Use of an element according to one of Claims 1 to 10 for thermal control of spacecraft in the wavelength range of the thermal infrared.

## Revendications

1. Élément électrochrome comprenant :
- une électrode (E1),
- une couche de fonction électrochrome (FS),
- un électrolyte conducteur d'ions (EY),
- une couche ayant une capacité de charge électrique élevée (SK),
- une contre-électrode (E2),
**caractérisé en ce que** la couche de fonction électrochrome (FS) se compose exclusivement d'une couche en semiconducteur dopé nanoporeux ayant une taille structurelle inférieure à 50 nm qui forme un réseau cohérent conducteur d'électricité, l'électrolyte conducteur d'ions (EY) remplissant les nanopores de la couche de fonction électrochrome.

2. Élément électrochrome selon la revendication 1, **caractérisé en ce que** la couche de fonction électrochrome (FS) se compose d'un oxyde semiconducteur des éléments étain, zinc, cadmium, indium, titane, tantale, niobium ou en silicium, germanium, arséniure de gallium, carbure de silicium, phosphure d'indium, sulfure de cadmium, séléniure de zinc.

3. Élément électrochrome selon l'une des revendications précédentes, **caractérisé en ce que** la couche de fonction électrochrome (FS) est dopée avec une concentration de dopant x telle que 0 < x ≤ 30 % mol.

4. Élément électrochrome selon l'une des revendications précédentes, **caractérisé en ce que** le matériau de dopage pour la couche de fonction électrochrome (FS) est un métal, par exemple de l'antimoine, du niobium, du vanadium, de l'étain ou de l'aluminium.

5. Élément électrochrome selon l'une des revendications précédentes, **caractérisé en ce que** le matériau dopant pour la couche de fonction électrochrome (FS) est un halogène, par exemple du fluor, du chlore, du brome ou de l'iode.

6. Élément électrochrome selon l'une des revendications précédentes, **caractérisé en ce que** la couche (SK) à capacité de charge électrique élevée est une couche en semiconducteur dopé nanoporeux ayant une taille structurelle inférieure à 50 nm, son degré de dopage étant défini de manière à obtenir un comportement neutre non électrochrome.

7. Élément électrochrome selon l'une des revendications précédentes, **caractérisé en ce que** la couche (SK) à capacité de charge électrique élevée est une couche accumulatrice d'ions, par exemple en CeₓTi_{y}O₂, en NiₓO_{y}, en VₓO_{y}, en polyaniline ou en polyéthylène dioxythiophène.

8. Élément électrochrome selon l'une des revendications précédentes, **caractérisé en ce que** l'une des deux électrodes (E1, E2) est une couche métallique réfléchissante.

9. Élément électrochrome selon l'une des revendications précédentes, **caractérisé en ce qu'**au moins une des deux électrodes (E1, E2) est transparente.

10. Élément électrochrome selon l'une des revendications précédentes, **caractérisé en ce que** sa plage de fonctionnement est définie sur la plage spectrale optique visible ou sur la plage spectrale infrarouge proche ou thermique par dopage de la couche de fonction électrochrome et/ou en faisant varier la taille structurelle de la couche de fonction électrochrome.

11. Procédé de fabrication d'une couche de fonction électrochrome selon l'une des revendications précédentes 1 à 10, **caractérisé en ce qu'**elle est obtenue à partir de nanoparticules dispersées dans une solution colloïdale qui se composent d'un matériau semiconducteur dopé et présentent une taille de particule inférieure à 50 nm.

12. Procédé de fabrication d'une couche de fonction électrochrome selon la revendication 11, **caractérisé en ce qu'**elle est obtenue à partir de la solution colloïdale par un procédé Spin-coating, par revêtement par trempage sol-gel ou par un procédé de pyrolyse à pulvérisation suivi d'un traitement thermique.

13. Procédé de fabrication d'une couche de fonction électrochrome selon l'une des revendications précédentes 1 à 10, **caractérisé en ce que** la fabrication est réalisée par un procédé électrochimique tel que la gravure poreuse ou l'anodisation poreuse de métaux.

14. Procédé de fabrication d'une couche de fonction électrochrome selon l'une des revendications précédentes 1 à 10, **caractérisé en ce que** la fabrication est réalisée par enveloppement dans un masque à nanostructure qui est ensuite retiré de manière sélective.

15. Utilisation d'un élément selon l'une des revendications 1 à 10 pour le camouflage militaire d'une plage de longueurs d'onde de l'infrarouge.

16. Utilisation d'un élément selon l'une des revendications 1 à 10 pour le contrôle thermique d'astronefs dans la plage de longueurs d'onde de l'infrarouge thermique.
